# EUROPEAN PATENT SPECIFICATION

(11) **EP 0 336 758 B1**
(45) Date of publication and mention of the grant of the patent: **29.06.1994**
(21) Application number: 89303412.4
(22) Date of filing: 06.04.1989
(51) Int. Cl.: F16F 9/50, F16F 9/348

(54) **Shock absorber with variable damping characteristics depending upon stroke speed**
Stossdämpfer mit von der Kolbengeschwindigkeit abhängigen Dämpfungscharakteristiken
Amortisseur de chocs ayant des caractéristiques d'amortissement variables selon la vitesse de déplacement du piston

(30) Priority: 06.04.1988 JP 46494/88 U; 06.04.1988 JP 46495/88 U; 07.04.1988 JP 46966/88 U; 12.01.1989 JP 2580/89 U
(43) Date of publication of application: 11.10.1989
(73) Proprietor: UNISIA JECS CORPORATION, Atsugi-shi Kanagawa-ken (JP)
(72) Inventor: Yamaura, Tamotsu, Atsugi-shi Kanagawa-ken (JP); Yamaoka, Fumiyuki, Atsugi-shi Kanagawa-ken (JP); Sasaki, Mitsuo, Atsugi-shi Kanagawa-ken (JP)
(74) Representative: Blanco White, Henry Nicholas

(56) References cited:
- DE-A- 2 731 015
- DE-A- 3 109 122
- FR-A- 1 545 406
- JP-U- 6 147 134

## Description

The present invention relates generally to a hydraulic shock absorber, such as for automotive suspension system. More specifically, the invention relates to a valve construction to be employed in the hydraulic shock absorber for achieving piston stroke speed dependent variable damping characteristics.

It should be appreciated that, in an automotive suspension system, shock absorbers are required to produce two contradictory effects. Namely, the shock absorber has to absorb vibration energy that would cause vibration in the vehicle body, in order to provide riding comfort in the vehicle. On the other hand, the shock absorber has to damp vibration for suppressing relative displacement between the vehicle body and a suspension member so as to suppress attitude changes, for driving stability.

It should also be appreciated that vibration energy generated in a road wheel due to unevenness generally influences riding comfort and has relatively small magnitude and high frequency, causing small magnitude, high speed piston movements in the shock absorber. On the other hand, vibration energy induced in the vehicle body generally influences driving stability, by causing attitude change, such as pitching, rolling and so forth, and has relatively great magnitude and low frequency, thus causing high magnitude, low speed piston movements.

In order to provide both riding comfort and driving stability, it is therefore required to absorb high frequency vibration and to damp low frequency vibration. In the prior art, there have been proposed various shock absorbers which attempted to provide piston stroke dependent damping characteristics for accomplish both of the aforementioned tasks.

For example, JP-A-Showa 61-47134 (on which the preamble of claim 1 is based) discloses a shock absorber with a multi-stage valve assembly employed in a shock absorber piston. In that valve assembly, first stage and second stage disc valves are arranged in series or in tandem fashion with respect to a fluid path for fluid communication between upper and lower working chambers defined in a shock absorber cylinder. The first stage valve is designed to respond to a pressure difference across it to open for fluid communication therethrough. On the other hand, the second stage valve is designed to respond to a higher pressure difference than the first stage valve to open for fluid communication therethrough. The second stage valve also defines a constant orifice or orifices having a predetermined fixed fluid path area to permit a limited fluid flow therethrough even when the second stage valve is closed.

With that previously proposed construction, a low speed piston stroke creates a small pressure difference between the upper and lower working chambers and thus exerts a small pressure on the first stage and second stage valves. The first stage valve is responsive to this small pressure to open to establish fluid communication between the upper and lower fluid chambers. Therefore, the working fluid flows through the gap formed in the first stage valve and through the constant orifice. In such a case, since the path area is limited, a substantial flow restriction for the working fluid is provided, to generate a great damping force to damp the vibration induced in the vehicle body. On the other hand, in response to a high frequency piston stroke which creates a greater pressure difference between the upper and lower working chambers, both the first stage and the second stage valves are open to provide increased fluid path area and a smaller damping force. Therefore, the vibration energy input from the road wheel can be absorbed for avoiding a rough ride.

In such a valve construction, the first stage valve is driven to deform substantially more often than the second stage valve. Therefore, the first stage valve may have a shorter life than the second stage valve. Particularly, when the first stage valve has constant resilient characteristics, it may be subject to high stresses, further shortening its life.

On the other hand, at a pressure difference greater than the pressure relief point of the second stage valve, the damping characteristic at a flow restriction orifice extending through the shock absorber piston is proportional to the square of the piston stroke speed. On the other hand, at the same time, the damping characteristic at the first and second stage valves is proportional to the two-thirds power of the piston stroke speed. As a result, the variation characteristics of the overall damping characteristics of the shock absorber cannot be linear, which causes difficulty in setting desired variation characteristics.

Therefore, it is an object of the present invention to provide a hydraulic shock absorber which has linear damping characteristics in relation to a piston stroke speed.

Another object of the invention is to provide a hydraulic shock absorber which can avoid fatigue of a valve member for generating damping force, and thus extend the life of the shock absorber.

The invention provides a flow restriction valve unit for a hydraulic shock absorber, which valve unit is provided in one of a piston assembly or a bottom valve assembly and associated with a fluid path for communication between first and second fluid chambers, comprising: a flow restricting orifice forming part of the fluid path for permitting fluid flow therethrough at a first, limited flow rate; a first valve associated with the flow restricting orifice and normally closing one end of the orifice for blocking fluid communication between the first and second fluid chambers, and being responsive to a fluid pressure difference between the first and second fluid chambers greater than a predetermined magnitude to open the said one end of the orifice to establish fluid communication permitting fluid flow from the first fluid chamber to the second fluid chamber; and a second valve associated with, and arranged downstream of, the first valve in series with the latter with respect to the fluid flow from the first fluid chamber to the second fluid chamber, the second, downstream valve having a flow path of predetermined constant path area for communication between the downstream side of the first, upstream valve and the second fluid chamber, and being responsive to a fluid pressure difference between the downstream side of the first valve and the second fluid chamber greater than a second predetermined magnitude to increase its path area; characterised in that the first valve includes means for modifying the opening characteristics of the first valve so as to restrict further opening of the first valve when subject to a pressure difference across it substantially corresponding to the presence of a pressure difference of the said second predetermined magnitude between the downstream side of the first valve and the second fluid chamber; and that the overall combined damping characteristic of the first and second valves (138, 136) varies substantially linearly with the pressure difference between the first and second fluid chambers (12, 14).

The invention also provides a hydraulic shock absorber arranged to be disposed between relatively movable first and second objects for absorbing vibration energy which causes relative movement between the first and second objects, comprising: a cylinder tube defining an internal space and arranged to be connected to the first object for movement therewith; a piston assembly disposed within the internal space of the cylinder tube for defining first and second fluid chambers therein, the piston being arranged to be connected to the second object by means of a piston rod for movement therewith; and a flow restriction valve unit according to the invention provided in the piston assembly associated with a fluid path for communication between the said first and second fluid chambers.

Preferably, the first, upstream valve has a valve member capable of shifting in accordance with increasing fluid pressure in the first fluid chamber, the valve member cooperating with a stopper means which limits the shifting range of the valve member. The valve member may comprise a resiliently deformable disc, and the stopper means may then comprise a disc shaped member having substantially the same diameter as the valve member so that at least the circumferential edge portion of the valve member seats thereon at a predetermined magnitude of resilient deformation, which stopper means defines a clearance to permit fluid flow from the first, upstream valve to the second, downstream valve through the clearance. The disc shaped member may comprise a first, smaller diameter disc and a second, larger diameter disc which has essentially the same diameter as the valve member, the second disc being positioned to limit deformation of the valve member by making contact with the circumferential edge of the valve member and the first disc being positioned to limit deformation at a portion of the valve member of intermediate radius. Alternatively, the disc shaped member may be resiliently deformable. In a further alternative embodiment, the disc shaped member may comprise a plurality of resiliently deformable discs laminated to each other.

The hydraulic shock absorber may comprise a plate-like member disposed between the first, upstream valve and the discharge outlet of the orifice for receiving working fluid flow and distributing the uniform fluid pressure over the whole effective area of the first upstream valve. In an alternative embodiment, the pressure difference between the first and second fluid chamber is created by a stroke of the piston assembly.

In a preferred construction, the orifice provides damping characteristics proportional to the square of the stroke speed of the piston assembly; the first, upstream valve provides damping characteristics proportional to the two-thirds power of the stroke speed of the piston assembly; and the second, downstream valve provides damping characteristics in response to stroke speeds of the piston assembly lower than or equal to a predetermined piston speed criterion, proportional to the square of the stroke speed of the piston assembly, and in response to stroke speeds of the piston assembly higher than the piston stroke criterion, proportional to the two-thirds power of the stroke speed of the piston assembly.

The present invention will be understood more fully from the detailed description given herebelow and from the accompanying drawings of the preferred embodiments of the present invention, which, however, should not be taken to limit the invention to the specific embodiment or embodiments, but are for explanation and understanding only.

In the drawings:
**Fig. 1** is a section of a major part, including a piston assembly, of the first embodiment of a hydraulic shock absorber according to the present invention;
**Fig. 2** is an enlarged section of a flow restricting valve unit employed in the first embodiment of the hydraulic shock absorber according to the invention;
**Figs. 3** and **6** show examples of stopper plates to be employed in the first embodiment of the hydraulic shock absorber of **Fig. 1**;
**Fig. 7** is a section of a piston assembly in the second embodiment of a hydraulic shock absorber according to the present invention;
**Figs. 8** and **9** are enlarged sections of valve units employed in the second embodiment of the hydraulic shock absorber in different mode positions;
**Fig. 10** is an enlarged section of a modification of valve unit to be employed in the second embodiment of the hydraulic shock absorber of **Fig. 7**;
**Fig. 11** is a section of a piston assembly in the third embodiment of a hydraulic shock absorber according to the present invention;
**Figs. 12** and **13** are enlarged sections of valve units employed in the third embodiment of the hydraulic shock absorber in different mode positions;
**Fig. 14** is a graph showing variation of damping force to be generated at various piston stroke speed;
**Fig. 15** is a section of a piston assembly in the fourth embodiment of a hydraulic shock absorber according to the present invention;
**Fig. 16** is an enlarged section of a valve unit employed in the piston assembly of the fourth embodiment of the hydraulic shock absorber of **Fig. 15**; and
**Figs. 17** to **19** are enlarged sections showing variation of the valve unit to be employed in the fourth embodiment of the hydraulic shock absorber of **Fig. 16**.

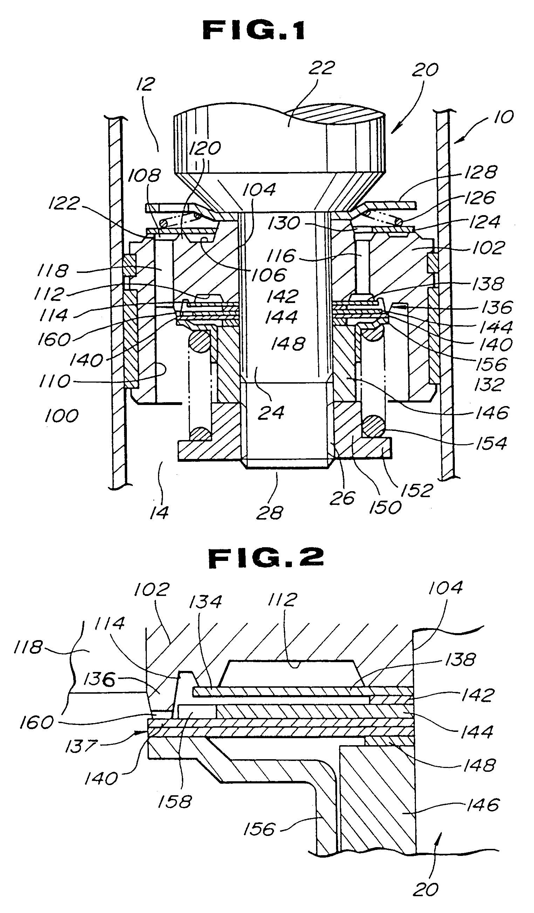

Referring now to the drawings, particularly to **Fig. 1**, the first embodiment of a hydraulic shock absorber according to the present invention, employs a piston assembly **100** disposed within a cylinder tube **10** which forms a shock absorber housing filled with a hydraulic working fluid. The piston assembly **100** is disposed within the internal space of the cylinder tube **10** in order to divide the internal space into an upper and a lower fluid chamber **12** and **14**. The piston assembly **100** is mounted at the lower end of a piston rod **20** which has an upper end extending through the upper end of the cylinder tube **10**. In practical use, the shock absorber is disposed between upper and lower objects which are movable relative to each other, so as to absorb vibration energy causing relative movement of the upper and lower objects. Though the discussion herein is given in terms of vertical installation of the shock absorber, the shock absorber is not limited to installation in a vertical orientation. The shock absorber can be installed horizontally so as to absorb vibration energy between horizontally arranged objects.

When the shock absorber is vertically installed as hereinbelow discussed, the piston rod **20** is connected to the upper object for moving the piston assembly **100**, and the lower end of the cylinder tube **10** is connected to the lower object. If the shock absorber is employed in an automotive suspension system, the piston rod **20** is connected to a vehicle body at the top end and the cylinder tube **10** is connected to a suspension member which rotatably supports a road wheel. Though the shock absorber is hereinafter discussed as being positioned with the piston rod upwards, it is possible instead to position the shock absorber with the piston rod downwards.

As seen from **Fig. 1**, the piston rod **20** has a greater diameter major section **22** and a smaller diameter lower end section **24**. The lower end section **24** has a threaded lower end **26**. The lower end section **24** with the threaded lower end **26** forms a piston assembly receptacle **28**.

The piston assembly **100** has a piston body **102** as principle component of the piston assembly. The piston body **102** has a center hole **104**, through which the lower end section **24** of the piston rod **20** extends. The piston body **102** has an upper surface facing the upper working chamber **12** and a lower surface facing the lower working chamber **14**. Coaxially arranged inner and outer annular grooves **106** and **108** are formed on the upper surface of the piston body **102**. On the other hand, a circular groove **110** is formed on the lower surface of the piston body **102**. Coaxially arranged inner and outer annular grooves **112** and **114** are formed on the surface facing the groove **110**. The inner annular grooves **106** and **112** are vertically aligned with each other. One or more fluid flow orifices **116** are formed through the piston body parallel to the axis of the piston rod **20** for communication between the inner grooves **106** and **112**. Similarly, the outer grooves 108 and **114** are arranged in vertical alignment and are connected along one or more communication paths **118**.

Along the inner and outer grooves **106** and **108** on the upper surface of the piston body **102**, annular lands **120** and **122** are formed. The lands **120** and **122** have upper planar surfaces which serve as valve seats for seating an annular disc shaped check valve member **124**. The check valve member **124** is biased toward the valve seat surfaces of the lands **120** and **122** by means of a coil form check spring **126** which is disposed between the check valve member **124** and a retainer disk **128**. With this construction, the check valve member **124** closes the annular grooves **106** and **108**. A plurality of through openings **130** are formed in circumferential alignment at a position corresponding to the radial position of the inner groove **106**. Therefore, the inner groove **106** is normally in communication with the upper working chamber **12** via these through openings **130**. On the other hand, the check valve member **124** has a solid construction at the position corresponding to the outer annular groove **108**. Therefore, the check valve member **124** normally blocks fluid communication, but if the fluid pressure in the lower working chamber **14** exceeds that in the upper working chamber by more than a predetermined relief pressure, the check valve is lifted, overcoming the spring force of the check spring **126**, to establish fluid communication between the lower and upper working chambers **14** and **12**. On the other hand, the check valve member **124** constantly blocks fluid flow via the communication paths **118** from the upper working chamber **12** to the lower working chamber **14**.

Lands **134** and **136** are formed along the circumferential edges of the inner and outer annular grooves **112** and **114**. The lands **134** and **136** have lower end planar surfaces. A piston stroke speed dependent variable damping characteristics valve unit **137** is provided in opposition to the lower surfaces of the lands **132** and **134**.

As shown in **Figs. 1** and **2**, the valve unit **137** comprises an upper disc valve member **138** and lower disc valve members **140**. An annular washer **142** and a stopper plate **144** are disposed between the upper and lower disc valve members **138** and **140**. These upper and lower disc valve members **138** and **140**, the washer **142** and the stopper plate **144** form the flow restriction valve unit **136** and are supported by an annular cylindrical collar **146** via disc shaped washer **148** on a retainer nut **150** which engages with the threaded lower end **26** of the piston rod **20**.

The retainer nut **150** has a laterally extending flange **152**, on which a lower end of an assist coil spring **154** is seated. The upper end of the assist coil spring **154** is seated on a spring seat member **156**. The spring force of the assist spring **154** is thus exerted on the outer circumferential edge portion of the lower disc valve member **140** via the spring seat member **156** so that the outer circumferential edge of the lower disc valve member **140** is normally urged toward the lower planar surface of the outer annular land **136**.

The upper and lower disc valve members **138** and **140** are formed of resiliently deformable material and provide spring characteristics for self-biasing their respective circumferential edge portions toward the opposing planar lower surfaces of the lands **134** and **136**. The upper disc valve member **138** thus normally seats its outer circumferential edge portion onto the lower planar surface of the land **134**, closing the inner annular groove **112**. Therefore, when the working fluid pressure in the upper working chamber **12**, which is introduced into the inner annular groove **112** via the orifices **116**, does not exceed the working fluid pressure in the lower working chamber **14** by a predetermined amount which is the set pressure of the upper disc valve member **138** and is determined by the resiliency thereof, the inner annular groove **112** is held closed. Therefore, fluid communication between the upper and lower working chambers **12** and **14** via the orifices **116** is blocked. The upper disc valve member **138** is overcome when the working fluid pressure in the upper working fluid chamber **12** exceeds that in the lower working chamber **14** by more than the set pressure to form a gap between the upper disc valve member **138** and the lower end planar surface of the land **134** to permit fluid flow therethrough. The stopper plate **144** is formed with one or more cut outs **158** on the outer circumference. On the other hand, the outer annular land **136** is formed with one or more cut outs **160** which cooperate with the lower disc valve member **140**, when the latter is seated on the seating surface of the land **136**, to form a constant path area orifice for fluid communication. Therefore, when the gap is formed between the upper disc valve member **138** and the mating surface of the land **134**, the working fluid flows through the cut outs **158** of the stopper plate **144** and the cut outs **160** of the land **136**. At this time, since the fluid flow path area at the gap between the upper disc valve member **138** and the land **134** is limited to restrict fluid flow, the gap serves as first stage orifice for generating damping force. On the other hand, the constant fluid flow path area orifices defined by the cut outs **160** of the land **136** provide another flow restriction for the fluid flowing from the upper working chamber **12** to the lower working fluid chamber and thus serve as a second stage flow restriction orifice.

It should be noted that the resilience of the lower disc valve member **140** is cooperative with the spring force of the assist spring **154** to determine the set pressure of the lower disc valve member **140**. The set pressure of the lower disc valve member **140** is determined to be greater than that of the upper disc valve member **138**. In addition, as clearly seen from **Fig. 2**, the effective area of the first disc valve member **138**, on which the working fluid pressure in the annular groove **112** is exerted, is set to be much greater than the effective area of the second disc valve member **140**. Therefore, the upper disc valve member **138** has a higher sensitivity to an excess of the working fluid pressure in the upper working chamber **12** over that in the lower working chamber **14**, than does the lower disc valve member **140**.

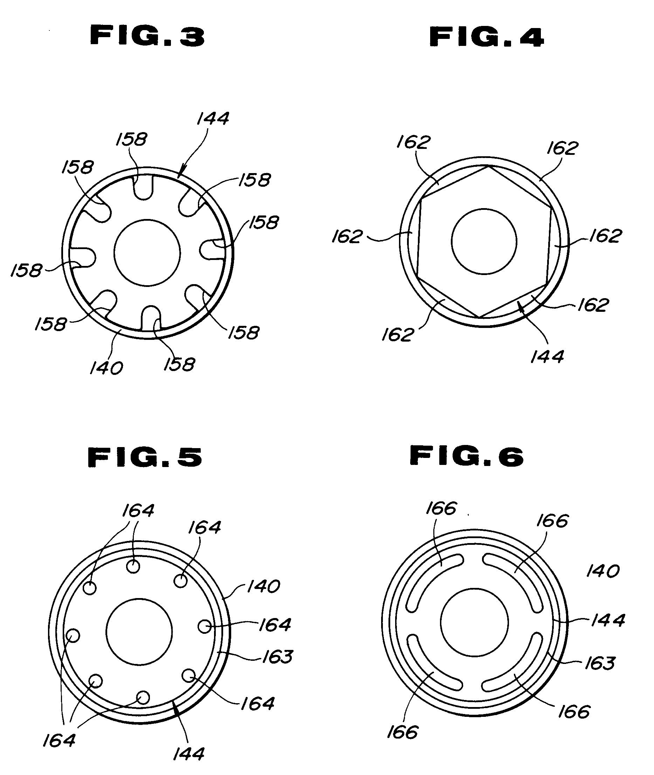

As shown in **Figs. 2** and **3**, the stopper plate **144** is formed of a rigid material and has a diameter slightly smaller than the internal diameter of the lower end of the annular land **136** to define a clearance therebetween. On the other hand, the cut outs **158** are formed in an essentially U-shaped configuration and arranged along the outer circumference at regular angular intervals.

In practical operation, damping force for absorbing vibration energy during a piston stroke toward the lower working chamber, compressing the working fluid in the lower working chamber, is generated by flow restriction in the openings **118** which provide limited fluid flow path area and by the spring force of the check spring **126**.

On the other hand, during a piston stroke toward the upper working chamber **12**, compressing the working fluid in the upper working chamber, the valve unit **136** operates in two different modes depending upon the piston stroke speed.

When the piston strokes at relatively low speed, the rate of change of the working fluid pressure in the upper and lower fluid chambers **12** and **14** is relatively low. Therefore, the rate of change of pressure difference between the upper and lower working chambers **12** and **14** remains low. As a result, the working fluid force acting on the valve unit as a result of the difference between the working fluid pressures in the upper and lower working chambers **12** and **14** increases relatively slowly. When the fluid force has become greater than the set pressure of the upper disc valve member **138**, the upper disc valve member **138** is deformed to shift the circumferential edge portion away from the seating surface of the land **134** to form a gap therebetween to permit fluid flow therethrough. On the other hand, at this time, the working fluid pressure acting on the lower disc valve member **140** remains smaller than the set pressure thereof. Therefore, the working fluid flowing through the gap formed by deformation of the upper disc valve member **138** flows through the constant flow area orifices **160** formed through the land **136**.

At this time, the damping characteristic at the first stage orifice formed by the deformation of the upper disc valve member **138** is proportional to the two-thirds power of the piston stroke speed. On the other hand, the damping characteristic at the second stage orifice defined by the constant fluid path area orifices **160** is proportional to the square of the piston stroke speed. Therefore, the damping force to be created in response to relatively low piston stroke speed becomes relatively greater.

On the other hand, when the piston strokes at relatively high speed, the pressure difference produced in the working fluid in the upper and lower working chambers **12** and **14** varies at greater rate than in the low piston stroke speed case set forth above. When the piston stroke speed is higher than a certain speed, the working fluid pressure exerted on the lower disc valve **140** becomes greater than the set pressure of the lower disc valve member **140** and overcomes the combined spring force of the valve member and the assist spring **154**. Therefore, the lower disc valve member **140** is deformed to shift the circumferential edge portion away from the seating surface of the land **136** to form a gap therebetween. By this, the fluid flow area defined by the second stage orifice becomes greater than in the low speed piston stroke.

At this time, the damping characteristic at the second stage orifice becomes proportional to the two-thirds power of the piston stroke speed. Therefore, the flow restriction for the working fluid at the second stage orifice becomes less to provide smaller damping force in comparision with that in the low piston stroke speed mode.

It should be appreciated that the stopper plate **144** is made of rigid material so as not to deform in response to the fluid pressure acting thereon. As seen from **Fig. 2**, the stopper plate **144** is placed away from the upper disc valve member **138**, leaving a clearance defined by the height of the washer **142**. This construction limits deformation of the upper disc valve member **138** to prevent excessive deformation of the latter. This extends the life of the upper disc valve member and thus increases the durability of the shock absorber.

**Figs 4** to **6** show modifications of configuration of the stopper member to be employed in the foregoing first embodiment. In **Fig. 4**, the stopper plate **144** is formed into hexagonal configuration to form clearance **162** between the inner circumferential edge of the land **136** and the straight portion between the adjacent corners of the hexagon. On the other hand, In **Fig. 5**, the stopper plate **144** is formed into a circular disc shaped configuration. The diameter of the circular disc shaped stopper plate **144** is set to be slightly smaller than the inner diameter of the inner circumferential edge of the land **136** in order to define an annular clearance **163**. A plurality of circular through openings **164** are formed in the vicinity of the circumferential edge. The pressurized fluid flowing through these openings **164** acts on the corresponding portion of the lower disc valve member **140** so as to prevent the second disc valve member from sticking on the stopper plate. In **Fig. 6**, the stopper plate **144** is formed with a plurality of elongated arc shaped openings **166**. The construction shown in **Fig. 6** produces substantially the same effect as the construction of **Fig. 5**.

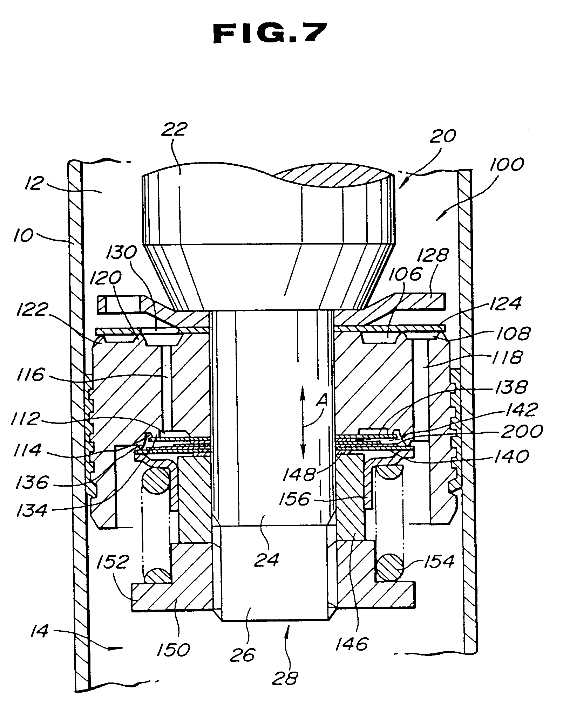

**Fig. 7** shows the second construction of the hydraulic shock absorber according to the invention. In the discussion given herebelow, the components common to the first and second embodiments will be represented by the same reference numerals as in the former embodiment and detailed discussion thereof will be omitted.

In the shown embodiment, the construction of the piston assembly **100** is almost same as that of the former embodiment except for a stopper plate **200** which is modified from the stopper plate **144** in the first embodiment. Namely, in the second embodiment, the stopper plate **200** comprises a pair of thinner plates **202** and **204**. The plates **202** and **204** are formed in disc shaped configurations. The external diameter of the plate **204** is substantially equal to the diameter of the upper disc valve member **138**. The plate **202** has a smaller diameter than the plate **204**. The plate **202** is placed on the plate **204**.

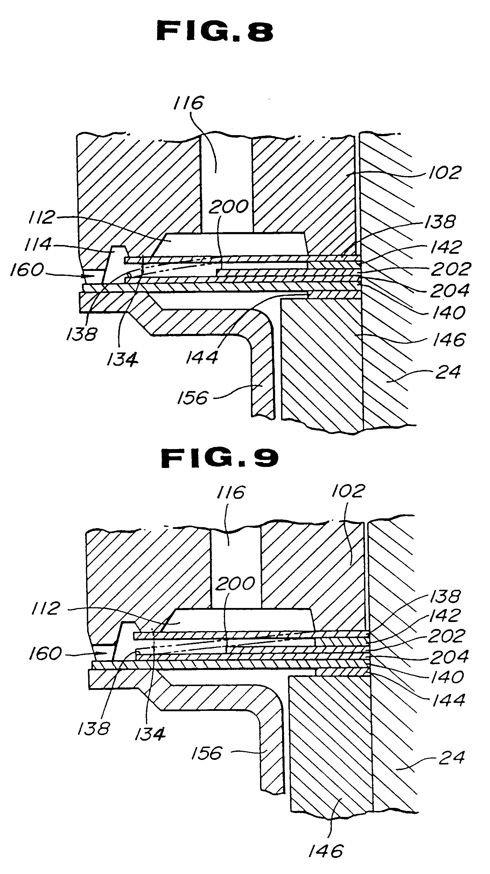

In the construction set forth above, the valve unit **136** operates to produce damping force in response to the piston stroke toward the upper working chamber **12** in a manner substantially as illustrated with respect to the foregoing first embodiment of the invention. In the second embodiment of **Fig. 7**, when the piston stroke speed is relatively low, the magnitude of deformation of the upper disc valve member **138** is relatively small. In such a case, the circumferential edge portion of the upper disc valve member **138** comes into contact with the plate **204** to restrict further deformation as shown by phantom line in **Fig. 8**. On the other hand, when the piston stroke speed is relatively high, whole body deformation is caused in the upper disc valve member **138** to cause deformation at the intermediate portion of the upper disc valve member. This causes expansion of the first stage orifice permitting greater flow of working fluid. By the whole body deformation, the intermediate portion of the upper disc valve member **138** comes into contact with the plate **202** to be restricted from further deformation.

Such construction of valve unit may provide variable damping characteristics even in the low piston stroke speed mode of operation. Furthermore, limitation of the deformation of the upper disc valve member **138** will successfully prevent the upper disc valve member from suffering excessive deformation which might cause shortening of life of the upper disc valve member.

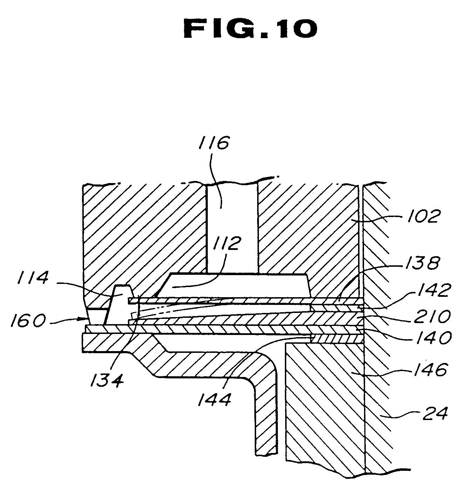

**Fig. 10** shows a modification of the aforementioned second embodiment of the valve unit to be employed in the second embodiment of the hydraulic shock absorber according to the invention. In this embodiment, the stopper plate **200** is replaced with a plate like member **210** with a slanted upper surface. As seen from **Fig. 10**, the plate like member **210** is formed in a disc shaped configuration and has a relatively thin circumferential edge with thickness increasing toward the centre. With this construction, the deformation stroke of the upper disc valve member **138** is gradually and linearly increased toward the outer circumferential edge.
With the shown construction, substantially the same effect for limiting deformation magnitude as that achieved by the embodiment of **Fig. 7** can be achieved.

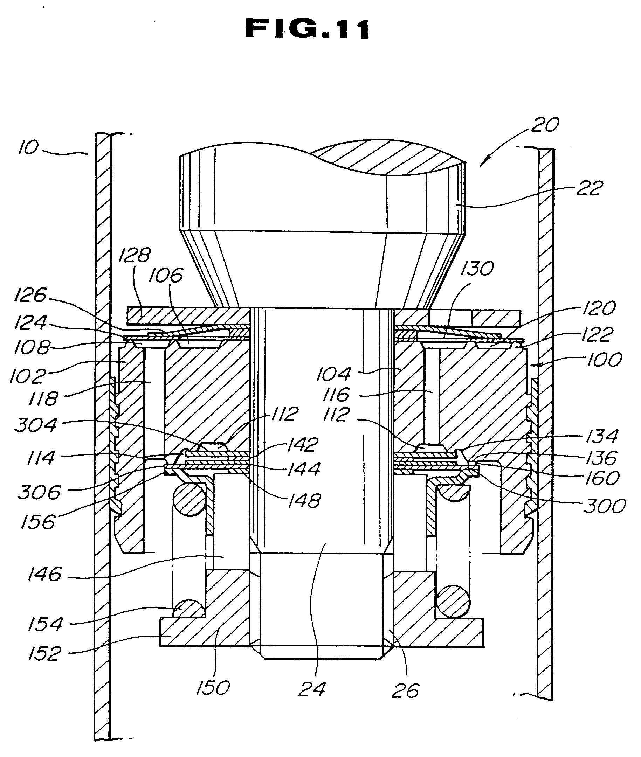

**Fig. 11** shows the third embodiment of the hydraulic shock absorber according to the invention. Similarly to the former embodiment of **Fig. 7**, the shown embodiment has substantially the same structural components to the first embodiment of **Fig. 1**. In order to avoid redundant discussion, components common to the shown embodiment and the first embodiment will be represented by the same reference numerals.

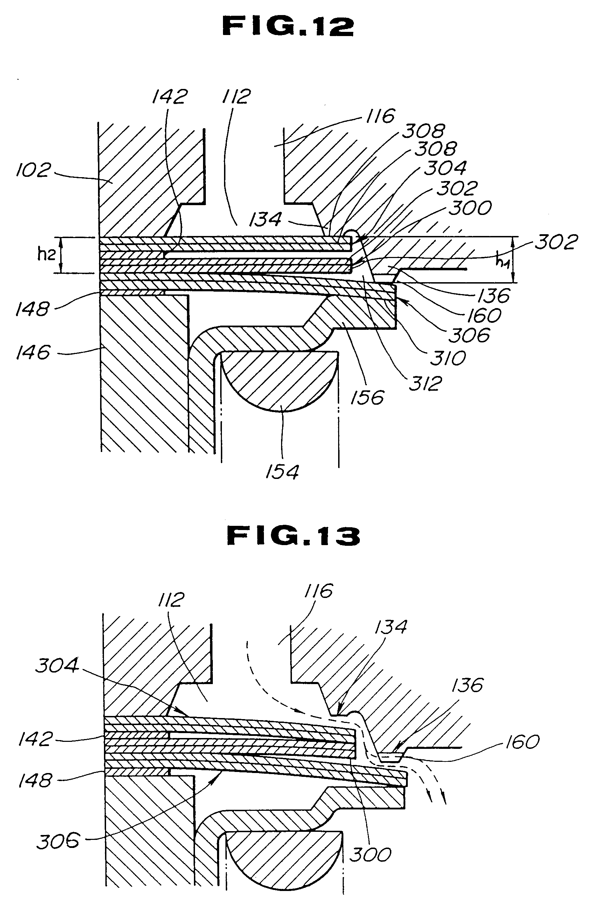

The third embodiment of the shock absorber is differentiated from the former embodiments of **Figs. 1** and **7** in the stopper plate **300** in the valve unit **136**. The stopper plate **300** employed in the shown embodiment comprises a plurality of thin resiliently deformable discs **302** as particularly shown in **Figs. 12** and **13**. The thin discs **302** are laminated to each other to form an integral deformable disc. Also, the upper and lower disc valve members **304** and **306** respectively comprise a plurality of thin resiliently deformable discs **308** and **310**. In the shown construction, the upper and lower disc valve members **304** and **306** and the stopper plate **300** are formed by laminated pairs of thin discs **308**, **310** and **302**, respectively. The resilience coefficients of respective thin discs **308**, **310** and **302** are differentiated from each other so as to establish desired resilience coefficients in the laminated forms. In the preferred construction, the resilience coefficient of the upper disc valve member **304** is set to be smallest among three laminated discs. On the other hand, the resilience coefficient of the stopper plate **300** may be set to be the greatest among three laminated plates.

As seen from **Figs. 11** to **13**, the seating surfaces of the lands **134** and **136** are vertically separated by a distance **h₁** in the vertical direction. In relation to the distance **h₁**, the thicknesses of the thin discs **308** and **302** and the height of the washer **142** are so selected as to have the overall thickness **h₂** as assembled smaller than the distance **h₁**. Therefore, the lower disc valve member **140**, which has the circumferential edge portion seating on the seating surface of the land **136**, is slightly deformed at the normal position as clearly shown in **Fig. 12**. This forms a clearance **312** between the lower disc valve member **306** and the stopper plate **300**. The clearance **312** formed between the stopper plate **300** and the lower disc valve member **306** cancels the fluid pressure exerted on the stopper plate when the upper disc valve member **304** is deformed to form the first stage orifice. Therefore, the first stage orifice may not become too great to provide the desired flow restriction for generating damping force.

Similarly to the foregoing first embodiment, the valve unit **136** performs two different modes of flow restriction for generating damping force.

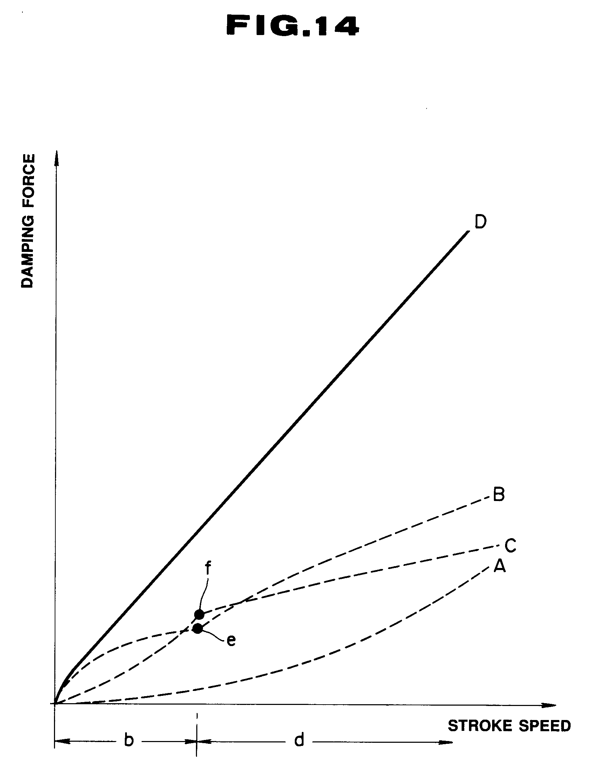

When the piston strokes at relatively low speed in a piston stroke speed range as illustrated by the range **b** in **Fig. 14**, the rate of change of the working fluid pressure in the upper and lower fluid chambers **12** and **14** remains relatively low. Therefore, the speed of variation of the pressure difference between the upper and lower working chambers **12** and **14** remains low. As a result, the working fluid force acting on the valve unit as a result of the difference between the working fluid pressures in the upper and lower working chambers **12** and **14** increases relatively slowly. When the fluid force has become greater than the set pressure of the upper disc valve member **304**, the upper disc valve member **304** is deformed to shift the circumferential edge portion away from the seating surface of the land **134** to form a gap therebetween to permit fluid flow therethrough. At this position, the damping force produced by the orifices is proportional to the square of the piston stroke speed, as illustrated by the broken line **A** of **Fig. 14**. Also, the damping force produced at the first stage orifice is proportional to the two-thirds power of the piston stroke speed as illustrated by broken line **B** in **Fig. 14**. On the other hand, at this time, the working fluid pressure acting on the lower disc valve member **140** remains smaller than the set pressure thereof. Therefore, the working fluid flowing through the gap formed by deformation of the upper disc valve member **138** flows through the constant flow area orifices **160** formed through the land **136**. The damping force produced at the second stage orifice is proportional to the square of the piston stroke speed, as illustrated by the broken line **C** of **Fig. 14**. Since these orifices are arranged in tandem fashion or in series, the overall damping force produced in this mode becomes almost linear, as illustrated by the solid line **D** of **Fig. 14**.

In response to piston stroke speeds in the range of **d** of **Fig. 14**, the upper disc valve member **304** contacts the stopper plate **300** which increases its effective stiffness. Therefore, at a point **e** in **Fig. 14**, the stiffness of the upper disc valve member **304** is changed. Therefore, the damping force comprises a component which is proportional to the two-thirds power of the piston stroke speed, and an initial component which is the damping force at the point **e**. On the other hand, at a point **f** of **Fig. 14**, the lower disc valve member **306** starts to deform, forming a gap between the seating surface of the land **136** and the circumferential edge portion of the lower disc valve member. After the deformation of the lower disc valve member **306** has started, the variation characteristic of the damping force becomes proportional to the two-thirds power of the piston stroke speed. Therefore, as shown by the solid line **D** in **Fig. 14**, even at this high piston speed range, the damping force variation characteristic becomes linearly proportional to the piston stroke speed.

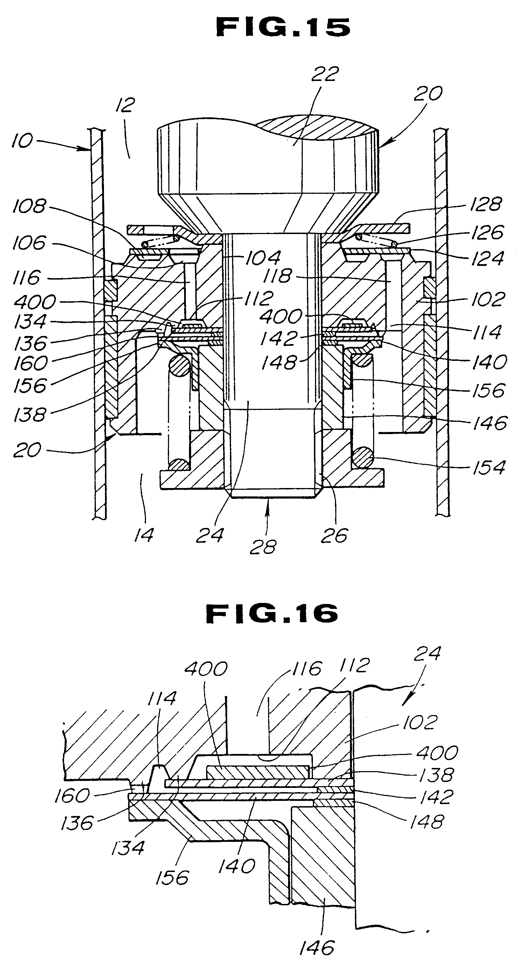

**Figs. 15** and **16** show the fourth embodiment of the shock absorber according to the present invention. The shown embodiment is illustrated in a form in which the stopper plates of the former embodiments are not provided. Though the shown embodiment does not have the stopper plate, it is of course possible to provide the stopper plate in this embodiment.

The particular point of the shown embodiment resides in an annular disc plate **400**. The annular disc plate **400** is provided within the inner annular groove **112** above the upper disc valve member **138**. The annular disc plate **400** has a width to receive all of the working fluid discharged through the orifices **116**. On the other hand, the outer diameter of the annular disc plate **400** is smaller than the diameter of the external circumferential edge of the inner annular groove **112** so that the working fluid introduced into the groove can flow through the gap therebetween.

This annular disc plate **400** prevents the working fluid from directly contacting the upper disc valve member **138** to cause concentration at the positions where the orifices **116** are formed. Since the concentration of the fluid pressure at the positions of the orifices will cause uneven deformation in the upper disc valve member and thus cause fluctuation of damping characteristics, it is desired to be avoided.

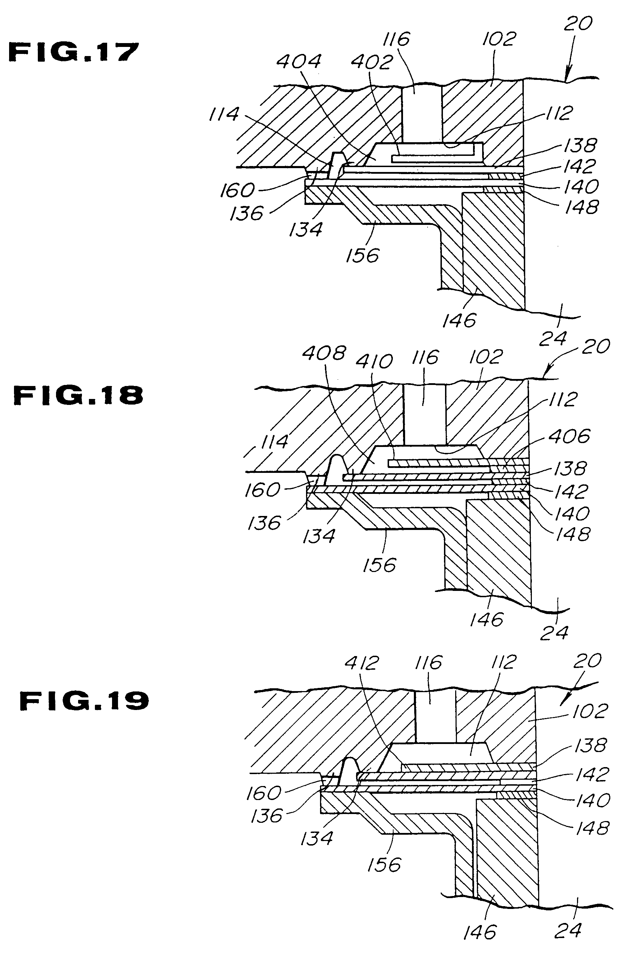

A similar effect for avoiding concentration of the fluid pressure at the particular section of the upper disc valve member **138** can be achieved by various constructions of members. For example, in the construction of **Fig. 17**, the annular disc valve member **402** is fixed onto the inner peripheral edge of the groove **112** so that the annular disc valve member **402** is placed away from the upper disc valve member **138** to leave a clearance **404** therebetween. On the other hand, in the example of **Fig. 18**, a clearance **406** is provided by a washer **408** disposed between the annular disc **410** and the upper disc valve member **138**. Though it is preferable for the annular disc to be spaced apart from the upper disc valve member **138**, it is possible to provide the annular disc **412** together with the upper disc valve member **138** in engagement with the piston rod **24**, as shown in **Fig. 19**.

## Claims

1. A flow restriction valve unit for a hydraulic shock absorber, which valve unit is provided in one of a piston assembly (100) or a bottom valve assembly and associated with a fluid path for communication between first and second fluid chambers (12, 14), comprising: a flow restricting orifice (116) forming part of the said fluid path for permitting fluid flow therethrough at a first, limited flow rate; a first valve (138) associated with the said flow restricting orifice (116) and normally closing one end of the orifice (116) for blocking fluid communication between the first and second fluid chambers (12, 14), and being responsive to a fluid pressure difference between the first and second fluid chambers (12, 14) greater than a predetermined first magnitude to open the said one end of the orifice (116) to establish fluid communication permitting fluid flow from the first fluid chamber (12) to the second fluid chamber (14); and a second valve (136) associated with, and arranged downstream of, the said first valve (138) in series with the latter with respect to fluid flow from the first fluid chamber (12) to the second fluid chamber (14), the second valve (136) having a flow path of predetermined constant path area (160) for communication between the downstream side of the first valve (138) and the second fluid chamber (14), and being responsive to a fluid pressure difference between the downstream side of the first valve (138) and the second fluid chamber (14) greater than a second predetermined magnitude to increase its said path area; characterised in that the first valve (138) includes means for modifying the opening characteristics (142, 144) of the first valve (138) so as to restrict further opening of the first valve when subject to a pressure difference across it substantially corresponding to the presence of a pressure difference of the said second predetermined magnitude between the downstream side of the first valve (138) and the second fluid chamber (14); and that the overall combined damping characteristic of the first and second valves (138, 136) varies substantially linearly with the pressure difference between the first and second fluid chambers (12, 14).

2. A valve unit as claimed in claim 1, wherein the first valve has a valve member (138) capable of shifting in accordance with increasing fluid pressure in the first fluid chamber, the said valve member cooperating with a stopper means (144) which limits the movement of the said valve member.

3. A valve unit as claimed in claim 2, wherein the said valve member comprises a resiliently deformable disc (138), and the stopper means comprises a disc shaped member (144) having substantially the same diameter as the said valve member so that at least the circumferential edge portion of the said valve member seats thereon at a predetermined magnitude of resilient deformation, which stopper means defines a clearance (163) to permit fluid flow from the first valve to the second valve through the said clearance.

4. A valve unit as claimed in claim 3, wherein the said disc shaped member comprises a first disc (202) and a second disc (204) which is of larger diameter than the first disc and has essentially the same diameter as the said valve member (138), the second disc being positioned to limit deformation of the valve member by contact with the circumferential edge of the valve member and the fist disc being positioned to limit deformation at a portion of the valve member of intermediate radius.

5. A valve unit claimed in claim 3, wherein the said disc shaped member (300) is resiliently deformable.

6. A valve unit as claimed in claim 3 or claim 5, wherein the said disc shaped member (300) comprises a plurality of resiliently deformable discs (302) laminated to each other.

7. A valve unit as claimed in any one of claims 1 to 6, which comprises a plate like member (400, 402, 410, 412) disposed between the first valve (138) and the discharge outlet of the said orifice (116) for receiving working fluid flow and distributing the uniform fluid pressure over the whole effective area of the first valve.

8. A valve unit as claimed in any one of claims 1 to 7, wherein the pressure difference between the first and second fluid chambers (12, 14) is created by stroke of the said piston assembly (100).

9. A valve unit as claimed in claim 8, wherein the said orifice (116) provides damping characteristics proportional to the square of the stroke speed of the piston assembly (100); the first valve (138) provides damping characteristics proportional to the two-thirds power of the stroke speed of the piston assembly; and the second valve (136) provides damping characteristics at stroke speeds of said piston assembly lower than or equal to a predetermined piston speed criterion, proportional to the square of the stroke speed of said piston assembly, and in response to stroke speeds of the piston assembly higher than the said piston speed criterion, proportional to the two-thirds power of the stroke speed of said piston assembly.

10. A hydraulic shock absorber arranged to be disposed between relatively movable first and second objects for absorbing vibration energy which causes relative movement between said first and second objects, comprising: a cylinder tube (10) defining an internal space and arranged to be connected to the first object for movement therewith; a piston assembly (100) disposed within the internal space of the cylinder tube for defining first and second fluid chambers (12, 14) therein, the piston being arranged to be connected to the second object by means of a piston rod (20) for movement therewith; and a flow restriction valve unit as claimed in any one of claims 1 to 9 provided in said piston assembly associated with a fluid path (116) for communication between the said first and second fluid chambers.

## Patentansprüche

1. Die Erfindung gibt eine den Durchfluß beschränkende Ventileinheit für einen hydraulischen Stoßdämpfer an, wobei die Ventileinheit in einer Kolbenanordnung (100) oder einer Bodenventilanordnung vorgesehen und mit einem Fluiddurchgang für eine Verbindung zwischen einer ersten und einer zweiten Fluidkammer (12, 14) verbunden ist, die folgende Merkmale aufweist: eine Durchflußbeschränkungsöffnung (116), die einen Teil des Fluiddurchgangs bildet, der ermöglicht, daß Fluid dort hindurch unter einer ersten, begrenzten Durchflußrate hindurchströmt; ein erstes Ventil (138), das mit einer den Durchfluß beschränkenden Öffnung (116) verbunden ist und das normalerweise ein Ende der Öffnung (116) zum Blockieren der Fluidverbindung zwischen der ersten und der zweiten Fluidkammer (12, 14) verschließt und das auf eine Fluiddruckdifferenz zwischen der ersten und der zweiten Fluidkammer (12, 14) größer als eine vorgegebene Größe anspricht, um das eine Ende der Öffnung (116) zu öffnen, um eine Fluidverbindung zu bilden, die einen Fluidfluß von der ersten Fluidkammer (12) zu der zweiten Fluidkammer (14) ermöglicht; und ein zweites Ventil (136), das mit, und zwar abströmseitig davon, dem ersten Ventil (138) in Reihe mit dem letzteren im Hinblick auf den Fluidfluß von der ersten Fluidkam- mer (12) zu der zweiten Fluidkammer (14) verbunden ist, wobei das zweite, stromabwärts liegende Ventil (136) einen Durchflußweg einer vorgegebenen konstanten Durchgangsfläche (160) für eine Verbindung zwischen der Abströmseite des ersten, anströmseitigen Ventils (138) und der zweiten Fluidkammer besitzt, und das auf eine Fluiddruckdifferenz zwischen der Abströmseite des ersten Ventils (138) und der zweiten Fluidkammer (14) größer als eine vorgegebene Größe anspricht, um seine Durchgangsfläche zu vergrößern; dadurch gekennzeichnet, daß das erste Ventil (138) Einrichtungen zur Modifizierung der Öffnungscharakteristiken (142, 144) des ersten Ventils (138) aufweist, um so weiter die Öffnung des ersten Ventils zu beschränken, wenn es einer Druckdifferenz über dieses im wesentlichen entsprechend dem Vorliegen einer Druckdifferenz der zweiten, vorgegebenen Größe zwischen der Abströmseite des ersten Ventils (138) und der zweiten Fluidkammer (14) unterliegt; und daß die kombinierte Gesamtdämpfungscharakteristik des ersten und des zweiten Ventils (138, 136) im wesentlichen linear zu der Druckdifferenz zwischen der ersten und der zweiten Fluidkammer (12, 14) ist.

2. Ventileinheit nach Anspruch 1, wobei das erste Ventil ein Ventilteil (138) besitzt, das für eine Verschiebung entsprechend mit einem Ansteigen des Fluiddrucks in der ersten Fluidkammer geeignet ist, wobei das Ventilteil mit einer Anschlageinrichtung (144) zusammenwirkt, die die Bewegung des Ventilteils begrenzt.

3. Ventileinheit nach Anspruch 2, wobei das erste Ventilteil eine elastisch deformierbare Scheibe (138) aufweist und die Anschlageinrichtung ein scheibenförmig geformtes Teil (144) aufweist, das im wesentlichen denselben Durchmesser wie das Ventilteil besitzt, so daß sich mindestens der Umfangskantenbereich des Ventilteils daran unter einer vorgegebenen Größe einer elastischen Deformation anlegt, wobei die Anschlageinrichtung einen Zwischenraum (163) festlegt, um einen Fluidfluß von dem ersten Ventil zu dem zweiten Ventil über den Zwischenraum zu ermöglichen.

4. Ventileinheit nach Anspruch 3, wobei das scheibenförmig geformte Teil eine erste Scheibe (202) und eine zweite Scheibe (204) aufweist, die einen größeren Durchmesser als die erste Scheibe besitzt und im wesent- lichen denselben Durchmesser wie das Ventilteil (138) besitzt, wobei die zweite Scheibe so angeordnet ist, um die Deformation des Ventilteils durch Berührung mit der Umfangskante des Ventilteils zu begrenzen und wobei die erste Scheibe so angeordnet ist, um die Deformation an einem Bereich des Ventilteils von einem Zwischenradius zu begrenzen.

5. Ventileinheit nach Anspruch 3, wobei das scheibenförmig geformte Teil (300) elastisch deformierbar ist.

6. Ventileinheit nach Anspruch 3 oder Anspruch 5, wobei das scheibenförmig geformte Teil (300) eine Mehrzahl von elastisch deformierbaren Scheiben (302) aufweist, die zueinander laminiermäßig angeordnet sind.

7. Ventileinheit nach einem der Ansprüche 1 bis 6, die ein plattenähnliches Teil (400, 402, 410, 412) aufweist, das zwischen dem ersten Ventil (138) und dem Abgabeauslaß der Öffnung (116) zur Aufnahme einer Arbeitsfluidströmung und zur Verteilung des gleichförmigen Fluiddrucks über die gesamte effektive Fläche des ersten Ventils angeordnet ist.

8. Ventileinheit nach einem der Ansprüche 1 bis 7, wobei die Druckdifferenz zwischen der ersten und der zweiten Fluidkammer (12, 14) durch einen Hub der Kolbenanordnung (100) gebildet wird.

9. Ventileinheit nach Anspruch 8, wobei die Öffnung (116) Dämpfungscharakteristiken liefert, die proportional zum Quadrat der Hubgeschwindigkeit der Kolbenanordnung (100) ist; wobei das erste Ventil (138) Dämpfungscharakteristiken proportional zu zwei Dritteln der Leistung der Hubgeschwindigkeit der Kolbenanordnung liefert; und wobei das zweite Ventil (136) Dämpfungscharakteristiken mit Hubgeschwindigkeiten der Kolbenanordnung geringer oder gleich einem vorgegebenen Kolbengeschwindigkeitskriterium bildet, und zwar proportional zu dem Quadrat der Hubgeschwindigkeit der Kolbenanordnung und in Abhängigkeit der Kolbengeschwindigkeit der Kolbenanordnung höher als das Kolbengeschwindigkeitskriterium, und zwar proportional zu zwei Dritteln der Leistung der Hubgeschwindigkeit der Kolbenanordnung.

10. Hydraulischer Stoßdämpfer, der so angeordnet ist, daß er zwischen relativ bewegbaren ersten und zweiten Objekten zur Absorption von Vibrationsenergie zwischengefügt ist, die eine relative Bewegung zwischen dem ersten und dem zweiten Objekt verursacht, gekennzeichnet durch: ein Zylinderrohr (10), das einen inneren Zwischenraum (163) festlegt und so angeordnet ist, daß es mit dem ersten Objekt für eine Bewegung mit diesem verbunden ist; eine Kolbenanordnung (100), die innerhalb des inneren Zwischenraums des Zylinderrohrs zur Festlegung einer ersten und einer zweiten Fluidkam- mer (12, 14) darin angeordnet ist, wobei der Kolben so angeordnet ist, daß er mit dem zweiten Objekt über Einrichtungen einer Kolbenstange (20) für eine Bewegung damit verbunden ist; und eine Durchflußbeschränkungsventileinheit, wie sie in einem der Ansprüche 1 bis 9 beansprucht ist, die in der Kolbenanordnung vorgesehen ist, die mit einem Fluiddurchgang (116) zur Verbindung zwischen der ersten und der zweiten Fluidkammer verbunden ist.

## Revendications

1. Unité formant vanne de restriction d'écoulement pour un amortisseur hydraulique des chocs, cette unité de vanne est prévue dans l'un d'un ensemble de piston (100) ou d'un ensemble de vanne de fond et associée à un trajet de fluide en vue d'une communication entre des première et deuxième chambres de fluide (12, 14), comprenant :
un orifice restreignant l'écoulement (116) faisant partie dudit trajet de fluide pour permettre l'écoulement du fluide à travers celui-ci à une première vitesse d'écoulement limité;
une première vanne (138) associée audit orifice restreignant l'écoulement (116) et fermant normalement une extrémité de l'orifice (116) pour bloquer la communication de fluide entre les première et deuxième chambres de fluide (12, 14) et répondant à une différence de pression de fluide entre les première et deuxième chambres de fluide (12, 14) supérieure à une première grandeur prédéterminée afin d'ouvrir l'une desdites extrémités de l'orifice (116) pour établir une communication de fluide permettant l'écoulement du fluide de la première chambre de fluide (12) à la deuxième chambre de fluide (14); et une deuxième vanne (136) associée à et disposée en aval de ladite première vanne (138) en série avec celle-ci relativement à l'écoulement du fluide de la première chambre de fluide (12) à la deuxième chambre de fluide (14), la deuxième vanne (136) possédant un trajet d'écoulement d'une zone de trajet constante prédéterminée (160) pour une communication entre le côté aval de la première vanne (138) et la deuxième chambre de fluide (14), et répondant à une différence de pression de fluide entre le côté aval de la première vanne (138) et la deuxième chambre de fluide (14) supérieure à une deuxième grandeur prédéterminée pour augmenter sa zone de trajet; caractérisée en ce que la première vanne (138) comprend des moyens pour modifier les caractéristiques d'ouverture (142, 144) de la première vanne (138) de façon à restreindre une ouverture supplémentaire de la première vanne lorsqu'elle est soumise à une différence de pression correspondant sensiblement à la présence d'une différence de pression de ladite deuxième grandeur prédéterminée entre le côté aval de la première vanne (138) et la deuxième chambre de fluide (14);
et en ce que l'ensemble de la caractéristique d'amortissement combinée des première et deuxième vannes (138, 136) varie de façon sensiblement linéaire avec la différence de pression entre les première et deuxième chambres de fluide (12, 14).

2. Unité de vanne selon la revendication 1, dans laquelle la première vanne possède un élément de vanne (138) capable d'un déplacement en accord avec la pression de fluide qui augmente dans la première chambre de fluide, ledit élément de vanne coopérant avec un moyen de butée (144) qui limite le mouvement dudit élément de vanne.

3. Unité de vanne selon la revendication 2, dans laquelle ledit élément de vanne comprend un disque élastiquement déformable (138), et le moyen de butée comprend un élément en forme de disque (144) ayant sensiblement le même diamètre que ledit élément de vanne de sorte qu'au moins la portion de bord circonférentielle dudit élément de vanne est logée sur celui-ci à une grandeur prédéterminée de déformation élastique, ledit moyen de butée définissant un jeu (163) pour permettre l'écoulement du fluide de la première vanne à la deuxième vanne à travers ledit jeu.

4. Unité de vanne selon la revendication 3, dans laquelle ledit élément en forme de disque comprend un premier disque (202) et un deuxième disque (204) qui est d'un diamètre plus grand que le premier disque et qui a essentiellement le même diamètre que ledit élément de vanne (138), le deuxième disque étant positionné de façon à limiter la déformation de l'élément de vanne par le contact avec le bord circonférentiel de l'élément de vanne, et le premier disque étant positionné pour limiter la déformation à une portion de l'élément de vanne d'un rayon intermédiaire.

5. Unité de vanne selon la revendication 3, dans laquelle ledit élément en forme de disque (300) est élastiquement déformable.

6. Unité de vanne selon la revendication 3 ou la revendication 5, dans laquelle ledit élément en forme de disque (300) comprend une pluralité de disques élastiquement déformables (302) laminés les uns aux autres.

7. Unité de vanne selon l'une des revendications 1 à 6, qui comprend un élément en forme de plaque (400, 402, 410, 412) disposé entre la première vanne (138) et la sortie d'évacuation dudit orifice (116) pour recevoir l'écoulement du fluide de travail et pour distribuer la pression de fluide uniforme sur l'ensemble de la zone active de la première vanne.

8. Unité de vanne selon l'une des revendications 1 à 7, dans laquelle la différence de pression entre les première et deuxième chambres de fluide (12, 14) est créée par la course dudit ensemble de piston (100).

9. Unité de vanne selon la revendication 8, dans laquelle ledit orifice (116) fournit des caractéristiques d'amortissement proportionnelles au carré de la vitesse de course de l'ensemble de piston (100); la première vanne (138) fournit des caractéristiques d'amortissement proportionnelles à deux tiers de la puissance de la vitesse de course de l'ensemble de piston; et la deuxième vanne (136) fournit les caractéristiques d'amortissement à des vitesses de course dudit ensemble de piston inférieures ou égales à un critère de vitesse de piston prédéterminé, proportionnel au carré de la vitesse de course dudit ensemble de piston, et en réponse à des vitesses de course de l'ensemble de piston supérieures audit critère de vitesse de piston, proportionnel au deux tiers de la puissance de la vitesse de course dudit ensemble de piston.

10. Amortisseur hydraulique des chocs agencé pour être disposé entre des premier et deuxième objets relativement mobiles pour absorber une énergie de vibrations qui provoque un mouvement relatif entre lesdits premier et deuxième objets, comprenant :
un tube cylindrique (10) définissant un espace interne et agencé pour être connecté au premier objet en vue d'un mouvement avec celui-ci;
un ensemble de piston (100) disposé à l'intérieur de l'espace interne du tube cylindrique pour définir des première et deuxième chambres de fluide (12, 14) à l'intérieur, le piston étant agencé pour être connecté au deuxième objet au moyen d'une tige de piston (20) pour un mouvement avec celui-ci; et une unité formant vanne de restriction d'écoulement telle que revendiquée dans l'une des revendications 1 à 9 réalisée dans ledit ensemble de piston associé à un trajet de fluide (116) pour une communication entre lesdites première et deuxième chambres de fluide.
